# EUROPÄISCHE PATENTSCHRIFT

(11) **EP 2 251 127 B1**
(45) Veröffentlichungstag und Bekanntmachung des Hinweises auf die Patenterteilung: **08.04.2015**
(21) Anmeldenummer: 10162993.9
(22) Anmeldetag: 17.05.2010
(51) Int. Cl.: B23D 47/02, B27B 5/06, B65G 7/06

(54) **Holzbearbeitungsmaschine mit Luftkissentisch**
Wood processing machine with air cushion table
Machine de traitement du bois dotée d'une table à coussin d'air

(30) Priorität: 15.05.2009 DE 202009007057 U
(43) Veröffentlichungstag der Anmeldung: 17.11.2010
(73) Patentinhaber: Wilhelm Altendorf GmbH & Co. KG, 32429 Minden (DE)
(72) Erfinder: Altendorf, Wilfried, 32429 Minden (DE)
(74) Vertreter: Eisenführ Speiser

(56) Entgegenhaltungen:
- EP-A2- 1 837 141
- DE-A1- 2 606 601
- DE-A1- 4 437 760
- DE-U1-202006 019 323
- FR-A1- 2 336 507
- FR-A1- 2 348 874

## Beschreibung

Die Erfindung betrifft eine Holzbearbeitungsmaschine gemäß dem Oberbegriff des Anspruchs 1 , einem Luftkissentisch gemäß dem Oberbegriff des Anspruchs 13 und ein entsprechendes Verfahren. Eine solche Maschine ist aus DE 20 2006 019323 U1 bekannt. Luftkissentische dieser Bauweise werden dazu eingesetzt, um Werkstücke oder andere Gegenstände leicht verschlieblich zu lagern. Das Funktionsprinzip solcher Luftkissentische beruht dabei darauf, dass die eine oder mehrere Luftzuführungsöffnungen mit einer Druckluftquelle verbunden sind, die einen Volumenfluss an vorzugsweise komprimierter Luft bereitstellt, der an die Vielzahl von Luftaustrittsöffnungen verteilt wird und dort nach oben aus den Luftaustrittsöffnungen austreten kann. Bei Luftkissentischen nach dem Stand der Technik ist hierbei ein Ventil im Bereich der Luftaustrittsöffnungen angeordnet, welches durch Eindrücken eines Stiftes, der über die obere Auflagefläche hinausragt, geöffnet wird und hierdurch das Ventil öffnet und den Luftaustritt aus der Luftaustrittsöffnung ermöglicht. Auf diese Weise kann ein Werkstück, welches oberhalb der Luftaustrittsöffnung platziert wird, den Stift eindrücken und hierdurch aufgrund des Austritts der Luft angehoben werden. Das Werkstück schwebt dann auf einem Luftpolster und kann in einfacher Weise oberhalb der Auflagefläche horizontal verschoben werden. Vorteilhaft an diesen Luftkissentischen mit Ventil in den Luftaustrittsöffnungen ist, dass eine Verschmutzung und Verstopfung der luftführenden Bereiche verhindert oder vermindert werden kann, die entstehen können, wenn Verschmutzungen, wie beispielsweise Späne oder andere, bei der Bearbeitung von Werkstücken entstehende Partikel in den Bereich der Luftaustrittsöffnung gelangen.

Aus DE102007022057A1 ist eine Plattenbearbeitungsanlage bekannt, welche über einen Auflagetisch verfügt, der eine Vielzahl von Luftaustrittsdüsen aufweist und so als Luftkissentisch dienen kann.

Aus der DE 20 2006 019 323 U1 ist ferner eine Aufteilanlage für plattenförmige Werkstücke bekannt, welche eine Nut zum Einhängen eines Luftkissentisches aufweist.

Nachteilig an den Luftkissentischen nach dem zuvor erläuterten Stand der Technik ist jedoch, dass Werkstücke, die nur eine geringe Flächenlast aufbringen, das stiftbetätigte Ventil nicht sicher öffnen und daher das Luftkissen nicht auslösen können. Es ist daher Aufgabe der Erfindung, einen Luftkissentisch bereitzustellen, der auch Werkstücke mit geringer Flächenlast tragen kann.

Diese Aufgabe wird erfindungsgemäß gelöst, indem der Luftverteiler mit zumindest einer, vorzugsweise jeder Luftaustrittsöffnung über einen Luftaustrittskanal verbunden ist, der sich vom Luftverteiler bis zu der Luftaustrittsöffnung erstreckt und der einen unterhalb der oberen Auflagefläche liegenden ersten Abschnitt aufweist, dessen Querschnitt in Erstreckungsrichtung des Luftaustrittskanals konstant ist und der zwischen dem ersten Abschnitt und der oberen Auflagefläche einen zweiten Abschnitt aufweist, dessen Querschnitt ausgehend von diesem ersten Abschnitt in Richtung auf die obere Auflagefläche erweitert ist.

Mit der erfindungsgemäßen Fortbildung des Luftkissentisches wird eine spezifische Art der Druckluftführung bereitgestellt, die es ermöglicht, auf die stiftbetätigten Ventile zu verzichten, ohne dass hierfür das Durchflussvolumen der Druckluft erhöht werden muss. Dies wird dadurch erreicht, dass jede Luftaustrittsöffnung über einen Luftaustrittskanal mit Druckluft versorgt wird, der in zwei Abschnitte unterteilt ist. Ein erster, unterer Abschnitt ist im Querschnitt konstant und stellt einen definierten Strömungswiderstand dar. Ein zweiter, in Strömungsrichtung der Druckluft hinter dem ersten Abschnitt liegender oberer Abschnitt hat einen gegenüber dem ersten Querschnitt erweiterten Querschnitt in Strömungsrichtung. Auf diese Weise kann die Luftauflagefläche in Form des Querschnitts der Luftaustrittsöffnung, weicher der Unterseite des mit dem Luftkissen zu tragenden Werkstücks gegenüberliegt, erhöht werden, ohne hierdurch den Durchströmungsquerschnitt des Luftaustrittskanals selbst insgesamt erweitern zu müssen. Durch diese Ausgestaltung können einerseits eine Vielzahl von Luftaustrittsöffnungen, deren Anzahl größer ist als die Luftaustrittsöffnungen bei Luftkissentischen nach dem Stand der Technik, bereitgestellt werden. Dies wird dadurch begünstigt, dass eine Ventilbetätigung des Luftflusses durch diese Luftaustrittsöffnungen nicht erforderlich ist und dadurch einerseits der montagetechnische Aufwand pro Luftaustrittsöffnung reduziert wird und andererseits die Gesamtkosten des Luftkissentisches verringert werden können.

Grundsätzlich ist zu verstehen, dass die Querschnittserweiterung des zweiten Abschnitts auf unterschiedliche konstruktive Weise bereitgestellt werden kann. So kann in einer einfachen Ausgestaltung der erste und zweite Abschnitt durch eine gestufte Bohrung ausgeführt sein und der Durchmesser der Bohrung im zweiten Abschnitt größer sein als im ersten Abschnitt. Alternativ hierzu kann auch der erste Abschnitt als Bohrung ausgeführt sein und der zweite Abschnitt als Schlitz, Kreuz, Langloch oder dergleichen, dessen Querschnittsfläche größer ist als diejenige des ersten abschnitts. In all diesen Ausgestaltungen wird ein Querschnittssprung vom ersten zum zweiten Abschnitt ausgeführt. Es kann weiterhin vorgesehen sein, dass sich die Querschnittsfläche des zweiten Abschnitts ausgehend von dem ersten Abschnitt in Richtung auf die obere Auflagefläche erweitert. In dieser Ausgestaltung wird ein Querschnittssprung vermieden und eine Erweiterung des Querschnitts ausgehend vom ersten Abschnitt vorgesehen.

Es hat sich überraschend gezeigt, dass mit dem erfindungsgemäßen Luftkissentisch eine größere Anzahl von Luftaustrittsöffnungen erreicht werden kann und hierbei gleichzeitig der Luftkissentisch mit einer Druckluftquelle von verringerter Leistung gegenüber dem Stand der Technik betrieben werden kann, ohne dass hierdurch die Tragfähigkeit des Luftkissentisches reduziert wäre. Insbesondere trägt der Luftkissentisch gemäß der Erfindung auch Bauteile, mit sehr geringer Flächenlasat so dass eine Verschiebung dieser Bauteile leicht und ohne die Gefahr von Oberflächenbeschädigungen an den Bauteilen möglich ist.

Weiterhin hat sich überraschend gezeigt, dass mit dem erfindungsgemäßen Querschnitts-verlauf eine Luftströmung oberhalb der Austrittsöffnung erzeugt wird, die in geringerem Maße dazu neigt, Späne, Partikel oder dergleichen in den Luftführungsbereich gelangen zu lassen. Die Gefahr der Verstopfung der Luftaustrittsdüsen oder anderer, luftführender Strömungswege des erfindungsgemäßen Luftkissentischs wird dadurch herabgesetzt.

Es ist zu verstehen, dass der Luftaustrittskanal sich vorzugsweise senkrecht zur oberen Auflagefläche erstreckt. Der sich im Querschnitt erweiternde, zweite Abschnitt kann insbesondere eine sich konisch erweiternde Ansenkung sein, wobei zu verstehen ist, dass eine lediglich der Entgratung einer Bohrung dienende Ansenkung nicht als erfindungsgemäße Erweiterung zu verstehen ist. Vielmehr ist es bevorzugt, dass durch die Querschnittserweiterung der Querschnitt des Luftaustrittskanals im zweiten Abschnitt gegenüber dem ersten Abschnitt um zumindest 50% erhöht ist, vorzugsweise verdoppelt ist. Durch die Querschnittserweiterung wird der Traganteil der oberhalb des Luftaustrittskanals liegenden Fläche erhöht, sodass sich auch kleinere, schwere Werkstücke noch leicht bewegen lassen.

Gemäß einer ersten bevorzugten Ausführungsform erstreckt sich der zweite Abschnitt von dem ersten Abschnitt bis zur oberen Auflagefläche. Mit dieser Ausgestaltung wird erreicht, dass sich die Erweiterung des zweiten Abschnitts unmittelbar bis in die obere Auflagefläche hinein erstreckt. Auf diese Weise können die für die Erfindung erforderlichen Funktionen des Luftaustrittskanals bei zugleich sehr geringer Bauhöhe des Luftkissentisches erzielt werden. Der erste und zweite Abschnitt grenzen hierbei unmittelbar aneinander. Insbesondere kann bei dieser Ausgestaltung der erste Abschnitt als Bohrung, insbesondere in der Funktion einer Düsenbohrung ausgeführt sein und der zweite Abschnitt als eine Ansenkung, die in diese Bohrung eingebracht ist.

Noch weiter ist es bevorzugt, wenn sich der Querschnitt des zweiten Abschnitts stetig erweitert und der Querschnitt des ersten und/oder des zweiten Abschnitt vorzugsweise rotationssymmetrisch ist. Unter eine stetigen Erweiterung soll hierbei verstanden werden, dass sich der Querschnitt des zweiten Abschnitts ausgehend von dem ersten Abschnitt mit einem dort ausgebildeten, dem Querschnitt des ersten Abschnitts entsprechenden Querschnitt erweitert und hierbei keine sprunghaften Querschnittserweiterungen auftreten. Dies kann insbesondere durch eine beispielsweise kegelförmige oder trompetenförmigen Erweiterung des zweiten Abschnitts erzielt werden. Auf diese Weise wird eine Luftführung mit geringen Strömungsverlusten durch den ersten und zweiten Abschnitt ermöglicht, was vorteilhaft für eine wirksame Luftkissenausbildung ist.

Durch die rotationssymmetrische Ausbildung des ersten und/oder zweiten Abschnitts kann eine einerseits strömungsgünstige Luftführung erfolgen, andererseits eine fertigungstechnisch vorteilhafte Ausbildung der ersten und zweiten Abschnitte des Luftkissentisches ermöglicht werden, indem diese mittels Bohrungen, Ansenkungen und dergleichen ausgebildet wird.

Insbesondere ist es bevorzugt, dass zwischen dem Luftverteiler und der Vielzahl von Luftaustrittsöffnungen, vorzugsweise zwischen der zumindest einen Luftzuführungsöffnung und der Vielzahl von Luftaustrittsöffnungen kein Ventil im Strömungsweg angeordnet ist. Erfindungsgemäß wird durch den ersten Abschnitt eine Düsenfunktion erfüllt, die eine ausreichende Drosselung der Luftströmung durch die Gesamtheit der Luftaustrittsöffnungen bewirkt, dass auch eine permanente Durchströmung der Luftaustrittsöffnungen, selbst bei nicht aufgelegtem Werkstück, mit einem wirtschaftlich vertretbaren Energieaufwand für die Druckluftquelle erfolgen kann. Zugleich wird durch die erfindungsgemäße Ausgestaltung des zweiten Abschnitts eine ausreichende Tragkraft des Luftkissentischs bereitgestellt. Diese Kombination von Eigenschaften ermöglicht es, dass der erfindungsgemäße Luftkissentisch auf die Ausbildung von Ventilen, die im Bereich jeder Luftaustrittsöffnung angeordnet sind, verzichten kann und stattdessen die Luftführung zu den Luftaustrittsöffnungen im Bereich unmittelbar darunter ausschließlich durch den ersten und zweiten Abschnitt erfolgt und geregelt wird. Dies hat insbesondere den Vorteil, dass auch leichte Werkstücke, die bei konventionellen Luftkissentischen das Ventil nicht auslösen können, vom erfindungsgemäßen Luftkissentisch getragen werden können und zudem eine Beschädigung der Oberfläche durch das Auslösen des Ventils ausgeschlossen ist.

Weiterhin ist es bevorzugt, den erfindungsgemäßen Luftkissentisch oder den eingangs beschriebenen Luftkissentisch fortzubilden, indem die Luftaustrittsöffnungen in einer oberen Deckplatte angeordnet sind und zumindest ein Teil jedes Luftaustrittskanals, vorzugsweise der erste und zweite Abschnitt des Luftaustrittskanals, in der Deckplatte ausgebildet ist und sich von der Oberseite zu der Unterseite der Deckplatte erstreckt und die Unterseite der Deckplatte mit einer Luftverteilungsschicht verbunden ist, welche als Luftverteiler ausgebildet ist. Mit dieser Ausgestaltung wird ein für die Funktionsweise und Fertigungstechnik des erfindungsgemäßen Luftkissentisches besonders bevorzugter Aufbau bereitgestellt, bei dem die Luftaustrittsöffnungen und Teile des Luftaustrittskanals, insbesondere der erste und zweite Abschnitt in einer Deckplatte angeordnet sind, die auf ihrer Unterseite mit einer zweiten Platte verbunden ist, beispielsweise durch Verklebung, welche die Funktion der Luftverteilung von zumindest einer zentralen Lufteintrittsöffnung zu der Vielzahl von Luftaustrittsöffnungen bewirkt. Die zumindest eine Lufteintrittsöffnung kann hierbei vorzugsweise in der Luftverteilungsschicht ausgebildet sein, beispielsweise an der Unterseite der Luftverteilungsschicht und weiter vorzugsweise als die Luftverteilungsschicht vollständig durchdringende Ausnehmung. Hierbei kann die zumindest eine Lufteintrittsöffnung folglich als Ausnehmung oder Kanal ausgestattet sein, der sich vorzugsweise senkrecht zur Flächenerstreckung der Luftverteilungsschicht erstreckt und auf seiner Oberseite durch die Deckplatte begrenzt wird. Diese Ausgestaltung ermöglicht es, die Luftverteilungsschicht separat zu fertigen, um die für die Luftverteilung erforderlichen geometrischen oder werkstofftechnischen Eigenschaften zu erzielen, die Deckplatte ebenfalls separat zu fertigen, um die Luftaustrittsöffnungen mit daran anschließenden ersten und zweiten Abschnitten einzubringen und nachfolgend diese beiden Schichten miteinander zu verbinden, um den erfindungsgemäßen Luftkissentisch zu verwirklichen.

Dabei ist es insbesondere bevorzugt, wenn die Luftverteilungsschicht zwischen der oberen Deckplatte und einer unteren Deckplatte, welche den Austritt von Luft nach unten verhindert, angeordnet ist. Mit dieser Ausgestaltung wird eine Sandwichkonstruktion realisiert, bei der die Luftverteilungsschicht zwischen einer oberen und unteren Deckplatte eingesetzt ist. Insbesondere kann durch diese Ausbildung als dreischichtige Platte eine besonders steife und gegen Verbiegung oder Verwindung unempfindliche Auflageplatte erreicht werden, die hinsichtlich ihrer Maßhaltigkeit und Planheit eine hohe Genauigkeit erzielt.

Bei den voranstehend erläuterten Ausgestaltungen mit Luftverteilungsschicht ist es insbesondere bevorzugt, wenn die Luftverteilungsschicht und/oder die obere Deckplatte eine Vielzahl von Luftführungskanälen aufweist, welche die zumindest eine Lufteintrittsöffnung mit der Vielzahl von Luftaustrittsöffnungen verbinden. Solche Luftführungskanäle können beispielsweise im Querschnitt rechteckig sein und als vielfach verzweigtes Kanalnetz in der Luftführungsschicht ausgebildet sein. Dabei können die Luftführungskanäle insbesondere in diejenige Seite der Luftverteilungsschicht eingebracht werden, welche nachfolgend mit der oberen Deckplatte verbunden wird, um hierdurch einerseits eine nachfolgende Abdichtung der Luftführungskanäle zu erzielen und andererseits eine direkte Luftführung aus den Luftführungskanälen in die Luftaustrittsöffnungen zu ermöglichen. Die Luftführungskanäle reichen hierbei hinsichtlich ihrer Tiefe vorzugsweise nur bis zu einem Teil der Stärke der Luftverteilungsschicht, um hierdurch die strukturelle Festigkeit der Luftverteilungsschicht zu erhalten und die Handhabbarkeit der Luftverteilungsschicht beim Fertigungsvorgang des Luftkissentisches zu vereinfachen. Die Breite und Tiefe der Luftführungskanäle kann vorzugsweise an die erforderlichen Luftmassenströme angepasst werden, die durch den Luftführungskanal geleitet werden. Dies bedeutet insbesondere, dass die Luftführungskanäle ihren Querschnitt ausgehend von der zumindest einen Lufteintrittsöffnung stetig oder sprunghaft reduzieren können. Dies ermöglicht eine effiziente Fertigungstechnik ohne hierdurch die strömungstechnischen Eigenschaften nachteilig zu beeinflussen. Dabei sind bei dieser Ausgestaltung ebenfalls Varianten umfasst, bei denen die gesamten Luftführungskanäle oder Teile hiervon in die obere Deckplatte eingebracht sind. Bei diesen Varianten ist zu verstehen, dass die Luftführungskanäle in die Unterseite der oberen Deckplatte eingebracht sind, beispielsweise durch eine entsprechenden Formgebung bei der Herstellung der Platte oder durch eine nachträglich spanende Bearbeitung der Platte. Diese Kanäle können dann entweder durch entsprechend zusammenwirkende Kanäle in der Luftverteilungsschicht ergänzt werden, wenn Luftverteilungsschicht und obere Deckplatte aneinandergefügt werden, oder können durch die Luftverteilungsschicht nach unten hin abgedichtet werden. Es ist zu verstehen, dass in diesem Fall die eigentliche Luftverteilung in der oberen Deckschicht erfolgt und die darunter angeordnete Luftverteilungsschicht lediglich die hierzu erforderlichen Luftführungskanäle nach unten abdichtet.

Noch weiter ist es bevorzugt, wenn die Luftverteilungsschicht in mehrere strömungstechnisch voneinander getrennte Bereiche unterteilt ist, weiche mit jeweils zumindest einer Lufteintrittsöffnung verbunden sind und jeweils die zumindest eine Lufteintrittsöffnung mit einer von entsprechend mehreren Gruppen von Austrittsöffnungen strömungstechnisch verbinden. Hierdurch werden unterschiedliche und separat ansteuerbare Gruppen von Luftaustrittsöffnungen bereitgestellt. Dies ermöglicht es einerseits, die Luftkissenwirkung nur in bestimmten, gewünschten Bereichen des Luftkissentisches ein- oder auszustellen, beispielsweise um das unerwünschte Verschieben von Werkstücken in bestimmten Bereichen zu verhindern, wenn in anderen Bereichen die Luftkissenwirkung zwecks einer solchen Verschiebung gewünscht ist.

Dabei ist es insbesondere bevorzugt, wenn jeder Bereich der Luftverteilungsschicht mit einer separat ansteuerbaren Luftdruckquelle verbunden ist oder mitttels eines separat ansteuerbaren Durchflussventils mit einer Luftdruckquelle verbunden ist, die mehrere Bereiche mit Luftdruck beaufschlagen. Bei dieser Ausgestaltung kann, wenn die Luftzufuhr zu jeder Gruppe von Luftaustrittsöffnungen über mehrere, separate anzusteuernde Druckluftquellen erfolgt, die insgesamt aufzuwendende Energiemenge für die Druckluftbereitstellung wirksam reduziert werden, da nur diejenigen Bereiche mit Druckluft versorgt werden, welche tatsächlich eine Luftkissenwirkung bereitstellen sollen. Dabei ist zu verstehen, dass die separate Versorgung der einzelnen Gruppen von Luftaustrittsöffnungen einerseits durch mehrere jeweils separat an- oder abzustellende Druckluftquellen erfolgen kann. Alternativ kann sie auch durch eine einzige gemeinsame Druckluftquelle für alle Gruppen von Luftaustrittsöffnungen erfolgen, deren Druckluft über entsprechende Leitungen und Stellventile zu den mehreren Gruppen von Luftaustrittsöffnungen versorgt wird. Bei dieser letztgenannten Ausgestaltung kann die Menge der bereitgestellten Druckluft der gemeinsamen einzigen Druckluftquelle dann entsprechend so eingestellt werden, dass sie zur Versorgung der Gruppen von Luftaustrittsöffnungen, zu denen aufgrund geöffneter Stellventile Druckluft versorgt werden soll, gerade ausreichend ist, um eine Energieeinsparung zu bewirken und eine für die Luftkissenwirkung optimale Druckluftmenge zu erhalten. Durch diese Ausgestaltungen werden funktionell mehrere zueinander fluchtende Luftkissentische bzw. Luftkissentischbereiche bereitgestellt. Diese können insbesondere jeweils aus einer separaten Luftdruckquelle mit Luftdruck beaufschlagt werden, wobei diese separaten Luftdruckquellen vorzugsweise solcherart mit einer Luftkissentischsteuerung signaltechnisch verbunden sind, dass sie individuell angesteuert und aktiviert bzw. deaktiviert werden können.

Noch weiter ist es bevorzugt, wenn die obere Deckplatte und gegebenenfalls die untere Deckplatte aus einem ersten Material, vorzugsweise einem metallischen Werkstoff wie Aluminium oder nichtrostender Stahl bestehen und die Luftverteilungsschicht aus einem zweiten Material, vorzugsweise einem Kunststoff, besteht und die obere bzw. untere Deckplatte mit der Luftverteilungsschicht verklebt ist. Hiermit wird einerseits eine leichtgewichtige Konstruktion und andererseits eine unempfindliche Oberfläche erzielt.

Schließlich ist es gemäß einer weiteren bevorzugten Ausführungsform vorgesehen, dass die zumindest eine Lufteintrittsöffnung solcherart mit einer umschaltbaren Luftpumpe verbunden ist, dass die Luftpumpe in einer ersten Betriebsschaltung Druckluft zu der zumindest einen Lufteintrittsöffnung versorgt und in einer zweiten Betriebsschaltung einen Unterdruck an die zumindest eine Lufteintrittsöffnung anlegt. Durch diese Umschaltbarkeit der Luftpumpe wird einerseits die Funktion als Luftkissentisch in der ersten Betriebsschaltung ermöglicht und andererseits in der zweiten Betriebsschaltung eine Fixierung der Werkstücke durch den in den Luftaustrittsöffnungen anliegenden Unterdruck erreicht, welche ein ungewünschtes Verschieben der Werkstücke auf der oberen Auflagefläche wirksam verhindern kann. Dabei ist zu verstehen, dass die Umschaltung zwischen der ersten und zweiten Betriebsschaltung durch eine entsprechende Wirkungsumkehr an der Luftpumpe selbst erfolgen kann, beispielsweise durch eine Laufrichtungsänderung, oder durch eine entsprechende Ventilverschaltung im Ein- und Auslass der Luftpumpe bei gleichbleibender Wirkungsrichtung der Luftpumpe, indem durch eine entsprechende Änderung der Druck- und Unterdruckluftführung der Ein- und Auslass der Luftpumpe in vertauschter Weise mit der zumindest einen Lufteintrittsöffnung verbunden werden kann. Mit dieser Ausgestaltung kann insbesondere die Luftdruckquelle, welche mit den Luftaustrittsöffnungen in Verbindung steht, einerseits in einer Funktion als Quelle für Druckluft, andererseits in einer anderen Funktion als Quelle für Saugluft eingesetzt werden. In der ersten Funktion wird durch die von der Luftdruckquelle ein Luftpolster oberhalb der von ihr versorgten Luftaustrittsöffnungen erzeugt, welches eine leichte und oberflächenschonende Verschieblichkeit von darüber gelagerten Werkstücken bewirkt. In der zweiten Funktion wird ein Unterdruck oberhalb der von der Luftdruckquelle versorgten Luftaustrittsöffnungen erzeugt, durch den darauf gelagerte Werkstücke fixiert werden. Grundsätzlich kann der erfindungsgemäße Luftkissentisch so ausgebildet sein, dass alle Luftaustrittsöffnungen von einer einzigen Luftdruckquelle versorgt werden und folglich als Druckluft- oder Saugluftöffnungen entweder die erste oder die zweite Funktion für die gesamte Auflagefläche des Luftkissentischs bereitstellen. In alternativen Ausführungsformen hierzu kann der Luftkissentisch in mehrere Bereiche unterteilt sein, jeweils von einer eigenen Luftdruckquelle oder von einer gemeinsamen Luftdruckquelle über ein jeweils eigenes Stellventil versorgt werden. Bei dieser Ausgestaltung kann ein erster Bereich mit Druckluft und ein zweiter Bereich mit Saugluft betrieben werden, um wahlweise Werkstücke auf bestimmten Bereichen des Luftkissentischs zu verschieben oder zu fixieren.

Die Holzbearbeitungsmaschine kann weiter fortgebildet werden durch eine Erfassungsvorrichtung zum Erfassen der Anzahl von Werkstücken auf dem Luftkissentisch und/oder der Auflagefläche, welche durch ein oder mehrere Werkstücke auf dem Luftkissentisch eingenommen wird und/oder der Gewichtskraft, welche die Werkstücke auf der Auflagefläche des Luftkissentischs aufbringen, und weiter gekennzeichnet durch eine Steuerungsvorrichtung, welche signaltechnisch mit der Erfassungsvorrichtung verbunden und ausgebildet ist, um eine Luftdruckquelle oder ein Durchflussventil, welche den Luftvolumenstrom durch und/oder den Luftdruck an den Luftaustrittsöffnungen zu steuern, in Abhängigkeit der Werkstückanzahl, der Auflagefläche und/oder der Gewichtskraft anzusteuern. Mit dieser Fortbildung kann die Luftdruckquelle oder das Durchflussventil solcherart angesteuert werden, dass der Volumenstrom und/oder der Druck solcherart geregelt werden, dass diese auf die für ein Anheben der Werkstücke auf der Auflagefläche benötigten Werte eingeregelt werden. Dies vermindert einerseits den Energieverbrauch der Luftdruckquelle und vermeidet darüberhinaus eine unnötig hohe Luftströmung oberhalb des Auflagetischs, welche für den Benutzer störend wäre. Dabei kann Druck bzw. Volumenstrom alleinig in Abhängigkeit von der Werkstückanzahl, der Auflagefläche oder der Gewichtskraft geregelt werden oder aus einer Kombination dieser Daten.

Die Erfassungsvorrichtung kann grundsätzlich beispielsweise in einer in einen Steuerungsrechner der Holzbearbeitungsmaschine eingespeicherte Planungssoftware integriert sein, welche die Werkstückbearbeitung plant und dem Benutzer angibt, welche Werkstücke er auf die Auflagefläche aufzulegen hat und welche daraus abgeleitet Kenntnis hat, welche Werkstücke auf der Auflagefläche gelagert sind. Eine solche Planungssoftware kann weiterhin Werkstückdaten wie Werkstückkantenabmessungen und Werkstückstärke abgespeichert haben, um hieraus Auflagefläche und, sofern weiterhin das Material des Werkstücks bekannt ist, das Gewicht aus einem Look-Up-Table, der Materialart und Materialdichte einander zuweist, zu berechnen. Besonders bevorzugt ist es, wenn Druck und/oder Volumenstrom in Abhängigkeit einer aus dem Gewicht und der Auflagefläche eines Werkstücks ermittelten Flächenpressung gesteuert werden.

Alternativ oder zusätzlich ist es weiter bevorzugt, wenn die Erfassungsvorrichtung eine optische Erfassungseinheit umfasst, welche angeordnet und ausgerichtet ist, um die Auflagefläche zu graphisch erfassen, und eine mit der optischen Erfassungseinheit signaltechnisch verbundene Bildauswertungseinheit, welche ausgebildet ist, um anhand den von der optischen Erfassungseinheit bereitgestellten Daten die Abmessungen der auf der Auflagefläche liegenden Werkstücke zu ermitteln. Diese optische Erfassungseinrichtung kann beispielsweise eine digitale Kamera sein, welche von senkrecht oder schräg oberhalb auf die Auflagefläche gerichtet ist. Bevorzugt ist die Bildauswertungseinheit ausgebildet, um die von einem Werkstück belegte Fläche aus den Bilddaten zu berechnen. Dabei kann weiter vorgesehen sein, dass die Bildauswertungseinheit auch die Materialstärke der Werkstücke erfasst und so weiter für eine Berechnung des Volumens der Werkstücke ausgebildet sein kann.

Grundsätzlich ist zu verstehen, dass die Steuerungsvorrichtung dazu ausgebildet sein kann, um Luftdruck und/oder Luftvolumenstrom anhand der Summe der erfassten Auflageflächen und/oder Gewichte, insbesondere der daraus berechneten aufsummierten Flächenpressungen der Werkstücke auf der Auflagefläche zu steuern. Alternativ oder kombiniert hierzu kann die Steuerungsvorrichtung aber auch das maximale Gewicht eines Werkstücks von mehreren aufliegenden Werkstücken oder eine maximale Flächenpressung durch ein Werkstück einer Mehrzahl von aufliegenden Werkstücken zur Steuerung heranziehen.

Ein weiterer Aspekt der Erfindung ist eine Holzbearbeitungsmaschine, insbesondere eine Plattensäge, weiche zumindest einen Luftkissentisch der zuvor beschriebenen Weise umfasst. Der erfindungsgemäße Luftkissentisch eignet sich insbesondere gut für Holzbearbeitungsmaschinen, da bei solchen Maschinen häufig Werkstücke mit sehr unterschiedlichem Flächendruck verarbeitet werden müssen und daher eine große Bandbreite an zu tragenden Flächendrücken vom Luftkissentisch erwartet werden muss. Zudem sind die Oberflächen von Werkstücken, die auf Holzbearbeitungsmaschinen bearbeitet werden, häufig empfindlich und es ist daher bevorzugt, diese ohne Kontakt zu einem Ventilbetätigungsstift oder dergleichen auf dem Luftkissentisch lagern zu können. Schließlich werden auf Holzbearbeitungsmaschinen häufig sehr großflächige Werkstücke bearbeitet, was eine kostengünstige Fertigung von Luftkissentischen für solche Holzbearbeitungsmaschinen erforderlich macht, um entsprechend großflächige Luftkissentische bereitstellen zu können.

Ein weiterer Aspekt der Erfindung ist ein Verfahren zum Herstellen eines Luftkissentischs für eine Holzbearbeitungsmaschine, insbesondere Plattensäge, mit den Schritten Bereitstellen einer Luftverteilungsschicht, Einbringen zumindest einer Lufteintrittsöffnung und mehrerer mit der zumindest einen Lufteintrittsöffnung in Verbindung stehenden Kanälen in die Luftverteilungsschicht, Bereitstellen einer oberen Deckplatte, Einbringen mehrere Luftaustrittsöffnungen in die Deckplatte, Einbringen mehrerer Luftführungskanäle in die Luftverteilungsschicht und/oder die obere Deckplatte, Aufkleben der oberen Deckplatte auf die Luftverteilungsschicht so dass die mehreren Luftaustrittsöffnungen über die Luftführungskanäle mit der Lufteintrittsöffnung verbunden werden.

Mit den erfindungsgemäßen Verfahren wird eine besonders kostengünstige und wirtschaftliche Fertigungsweise für die Herstellung eines Luftkissentisches bereitgestellt. Darüber hinaus wird eine Fertigungsweise bereitgestellt, die es erlaubt, einen Luftkissentisch herzustellen, bei dem auf den Fertigungsschritt verzichtet wird, dass Ventile in den jeweiligen Luftaustrittsöffnungen angeordnet sind, welche die Durchströmung der jeweiligen Luftaustrittsöffnung regeln. Dabei zu verstehen, dass das Einbringen der Luftführungskanäle in die Luftverteilungsschicht und/oder die obere Deckplatte bereits durch eine entsprechende Formgebung bei der Herstellung der Luftverteilungsschicht bzw. der Deckplatte erfolgen kann, beispielsweise durch entsprechende Thermoformung oder entsprechenden Strangguss oder Profilwalzen der Platte. Insbesondere ist es aber bevorzugt, die Luftführungskanäle durch eine spanende Bearbeitung einzubringen. Alternativ hierzu können die Luftführungskanäle durch eine offen poröse Struktur der oberen Deckplatte und/oder der Luftführungsschicht bereitgestellt werden, die zwecks besserer Luftverteilung vorzugsweise einzelne Luftführungskanäle aufweist, welche ausgehend von der zumindest einen Lufteintrittsöffnung für eine gleichmäßige Luftverteilung innerhalb der offen porösen Struktur sorgen.

Das Verfahren kann fortgebildet werden, indem gegenüberliegend zur oberen Deckplatte eine untere Deckplatte mit der Luftverteilungsschicht verklebt wird, welche die Kanäle gegen die Umgebung abdichtet. Mit dieser Ausgestaltung wird eine einerseits besonders belastbare und andererseits fertigungstechnisch besonders günstige Bauweise der Luftkissentischplatte bereitgestellt. Hierzu wird eine Sandwichkonstruktion vorgeschlagen, bei der vorzugsweise die obere und die untere Deckplatte aus einem metallischen Werkstoff, insbesondere Aluminium, hergestellt wird und die Luftverteilungsschicht aus einem Kunststoff, insbesondere einem geschäumten Kunststoff, hergestellt wird, um eine bestmögliche Funktionalität bei zugleich geringem Materialeinsatz und Gewicht der jeweiligen Schicht bzw. Deckplatte zu erzielen.

Schließlich ist es noch weiter bevorzugt, wenn das erfindungsgemäße Verfahren fortgebildet wird, indem an der Luftverteilungschicht oder der unteren Deckplatte eine Druckluftquelle im Bereich der Lufteintrittsöffnung befestigt wird, welche Druckluft in die Lufteintrittsöffnung versorgt. Diese Ausgestaltung erlaubt einen besonders Aufbau des Luftkissentisches, indem unmittelbar an der Luftverteilungsschicht bzw. der unteren Deckplatte eine Druckluftquelle angeordnet wird. Hierdurch entfällt insbesondere die ansonsten erforderliche Notwendigkeit, die Druckluftquelle an einer von dem Luftkissentisch entfernten Position anzuordnen und die Druckluft dann zu dem Luftkissentisch zu führen.

Eine bevorzugte Ausführungsform wird anhand der beiliegenden Figuren beschrieben. Es zeigen:
- Fig. 1:: eine perspektivische Ansicht einer bevorzugten Ausführungsform des erfindungsgemäßen Luftkissentisches von schräg vorne oben,
- Fig. 2:: eine Frontalansicht des erfindungsgemäßen Luftkissentisches gemäß Figur 1,
- Fig. 3:: eine perspektivische, teilexplodierte Darstellung des erfindungsgemäßen Luftkissentisches gemäß Figur,
- Fig. 4:: einen Längsschnitt durch eine obere Deckplatte des erfindungsgemäßen Luftkissentisches im Bereich einer Luftaustrittsöffnung,
- Fig. 5: eine perspektivische Ansicht einer bevorzugten Ausführungsform einer verstellbaren Luftfördereinrichtung des erfindungsgemäßen Luftkissentischs in einer Druckluftstellung, und
- Fig. 6: eine Ansicht der verstellbaren Luftfördereinrichtung nach Figur 5 in einer Saugluftstellung.

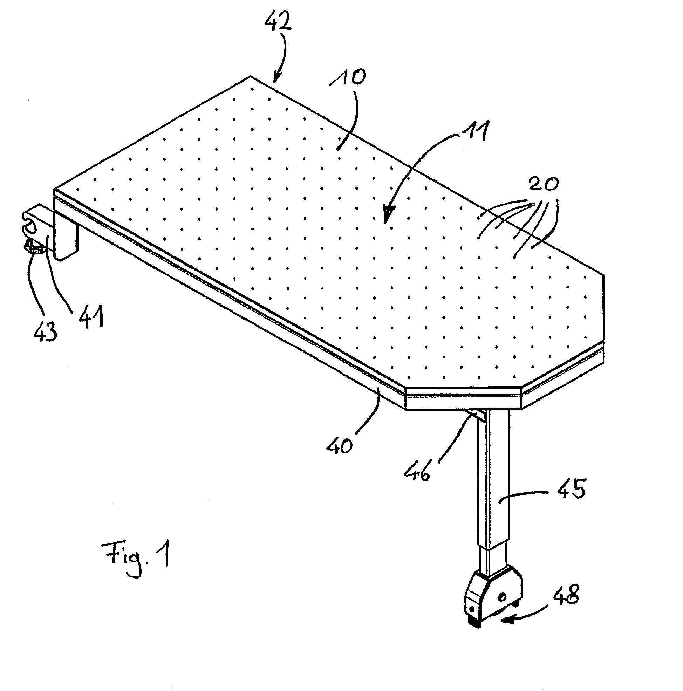

Wie in Figur 1 zu erkennen ist, weist der erfindungsgemäße Luftkissentisch eine obere Deckplatte 10 auf, die im Wesentlichen rechteckig mit an einer Seite abgeschrägten Eckbereichen ausgebildet ist. In die obere Deckplatte 10 sind eine Vielzahl von Luftaustrittsöffnungen 20 eingebracht, die in einem gleichmäßigen Raster über die gesamte obere Deckplatte 10 verteilt sind.

Die obere Deckplatte 10 ist mit einer unteren Deckplatte 40 verbunden, deren Außenkontur derjenigen der oberen Deckplatte 10 entspricht. Die untere Deckplatte 40 trägt an ihrer Unterseite an der rechteckig ausgebildeten Seite zwei Schienenführungsadapter 41, 42, welche es ermöglichen, den Luftkissentisch an einer Rundschiene zu befestigen und entlang der Rundschiene zu verschieben. Eine Feststellschraube 43 ist an dem Schienenführungsadapter 41 befestigt, um eine bestimmte Position des Luftkissentisches an den Führungsschienen zu fixieren.

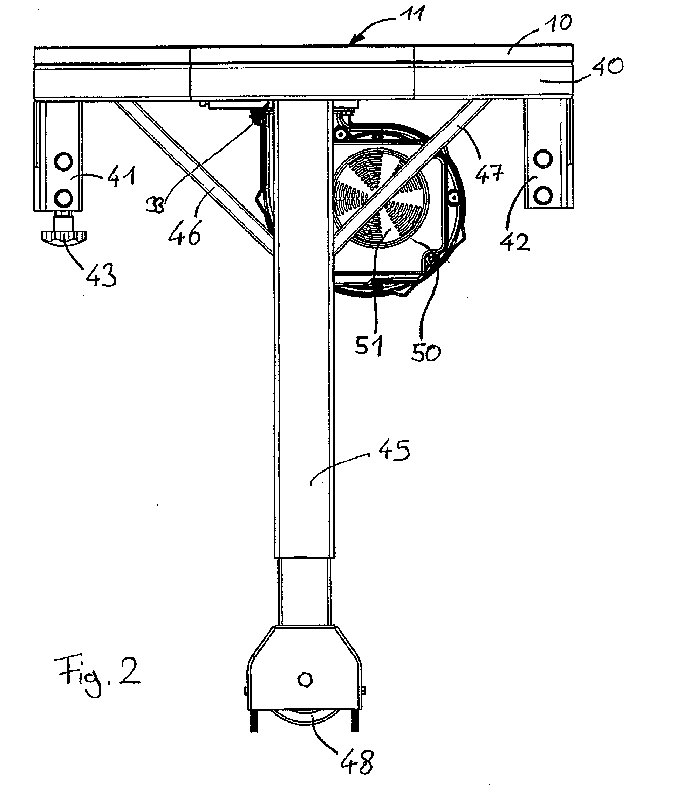

An der hierzu gegenüberliegenden, mit abgeschrägten Ecken versehenen Seite des Luftkissentisches ist an der Unterseite der unteren Decklage 40 eine teleskopierbare Vertikalstrebe 45 befestigt, die mittels zweier Streben 46, 47 an der unteren Decklage 40 abgestrebt ist, wie insbesondere aus Figur 2 ersichtlich. Am unteren Ende der Vertikalstrebe 45 ist eine Laufrolle 48 angeordnet, deren Laufrichtung der Verschiebrichtung entspricht, die durch die Schienenführungsadapter 41, 42 definiert wird und die folglich eine einfache Verschiebung und zugleich Abstützung des Luftkissentischs auf einem Untergrund entlang der Führungsschienen ermöglicht.

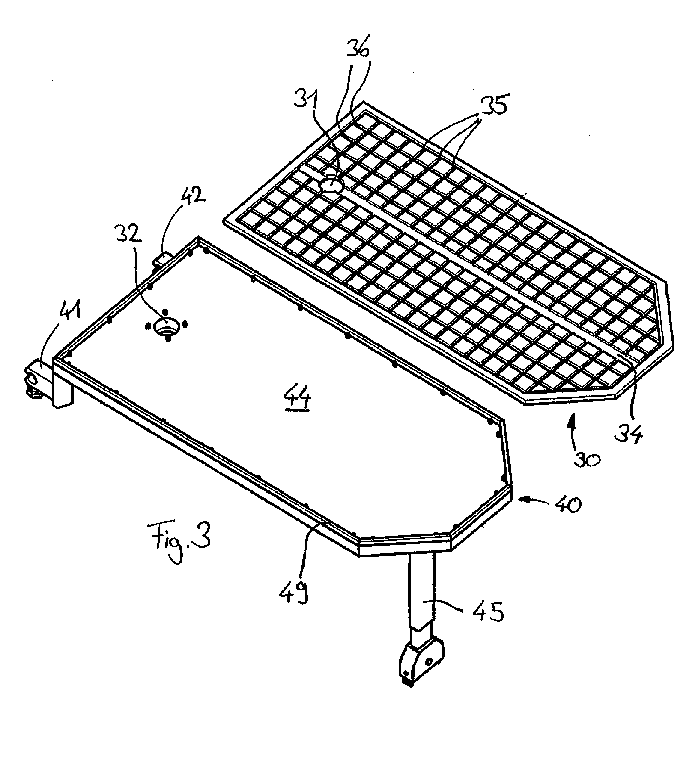

Wie man insbesondere Figur 3 entnehmen kann, ist die untere Decklage 40 mit einem allseits umlaufenden, nach oben vorstehenden schmalen Rand 49 versehen, der eine großflächige Ausnehmung 44 in der Oberseite der unteren Deckplatte 40 umschließt. In diese großflächige Ausnehmung 44 ist eine Luftverteilungsschicht 30 eingelegt, die solcherart zwischen der oberen und unteren Decklage angeordnet ist.

Die Luftverteilungsschicht 30 besteht aus einem festen Kunststoffschaum. In der Luftverteilungsschicht 30 ist eine senkrecht zur Flächenerstreckung verlaufende Durchgangsbohrung 31 angeordnet. Die Durchgangsbohrung 31 fluchtet mit einem Lufteintrittskanal 32, der in gleicher Verlaufsrichtung in die untere Deckplatte 40 eingebracht ist, wenn die Luftverteilungsschicht 30 in die Ausnehmung 44 der unteren Deckplatte 40 eingelegt ist. Der Lufteintrittskanal 32 endet an der Unterseite der unteren Deckplatte 40 in einer Lufteintrittsöffnung 33. Wie insbesondere aus Figur 2 zu erkennen ist, ist unmittelbar an der Unterseite der Deckplatte eine Luftdruckquelle 50 befestigt, die mit dieser Lufteintrittsöffnung 33 solcherart verbunden ist, dass ausgehend von einer Ansaugöffnung 51 Luft in verdichteter Form zu der Lufteintrittsöffnung 33 bereitgestellt wird. Die Luftdruckquelle 50 ist umschaltbar, so dass bei entsprechender Umschaltung sich die Laufrichtung der Luftdruckquelle verändert und an der Lufteintrittsöffnung 33 ein Unterdruck bereitgestellt wird.

In die Luftverteilungsschicht 30 ist, wie aus Figur 3 zu erkennen ist, ein zentraler Luftführungskanal 34 eingebracht, der sich in Längsrichtung der Luftverteilungsschicht 30 erstreckt. Ausgehend von diesem zentralen Luftführungskanal 34 erstrecken sich senkrecht hierzu ebenfalls in der Ebene der Luftverteilungsschicht 30 eine Vielzahl von zweiten Luftführungskanälen 35, deren Querschnitt geringer ist als derjenige des zentralen Luftführungskanals 34. Die Luftführungskanäle 35 sind parallel und beabstandet zueinander.

Wiederum senkrecht zu den Luftführungskanälen 35 verlaufen in der Luftverteilungsschicht 30 eine Vielzahl von dritten Luftführungskanälen 36, die parallel und beabstandet zueinander und zu dem zentralen Luftführungskanal 34 liegen.

Die Luftführungskanäle 35, 36 bilden eine regelmäßige Matrix, deren Kanalabstand solcherart gewählt ist, dass er mit der Teilung übereinstimmt, mit der die Luftaustrittsöffnungen 20 in die obere Deckplatte 10 eingebracht sind. Auf diese Weise wird, wenn die obere Deckplatte 10 auf die Luftverteilungsschicht 30 aufgelegt wird, jede Luftaustrittsöffnung mit der Lufteintrittsöffnung 31 über die Luftführungskanäle 34-36 verbunden.

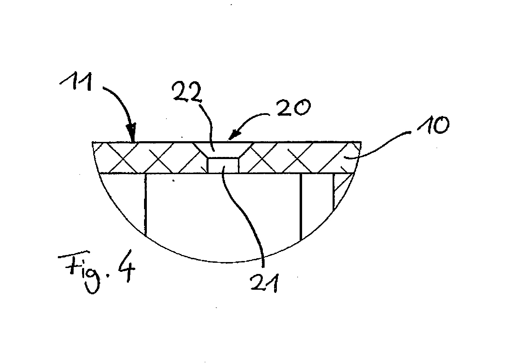

Wie insbesondere in Figur 4 zu erkennen, sind unterhalb jeder Luftaustrittsöffnung 20 ein Luftführungskanal angeordnet, der sich in einen ersten Abschnitt 21 und einen zweiten Abschnitt 22 gliedert.

Der erste Abschnitt 21 ist eine zylindrische Bohrung mit sehr geringem Durchmesser und dient als Düse für eine Drosselung des Luftstroms durch die Luftaustrittsöffnung 20. Der zweite Abschnitt 22 ist eine Ansenkung, die ausgehend von der oberen Auflagefläche 11 der oberen Deckplatte 10 fluchtend und konzentrisch zur Bohrung eingebracht ist, welche den ersten Abschnitt 21 ausbildet. In der Ebene der oberen Auflagefläche 11 definiert dieser zweite Abschnitt 22 bzw. die hierzu eingebrachte Senkung die Luftaustrittsöffnung 20. Der Querschnitt, welcher an diesem oberen Ende des zweiten Abschnitts 22 bereitgestellt ist, definiert zugleich die wirksame Angriffsfläche des Luftdrucks bei einem auf die obere Auflagefläche 11 aufgelegten Werkstück.

Der erfindungsgemäße Luftkissentisch wird dabei hergestellt wie folgt: Zunächst werden die obere und untere Deckplatte aus einem Aluminiumplattenmaterial ausgeschnitten. Die obere Deckplatte 10 wird dann mit einer entsprechenden Vielzahl von Bohrungen versehen, um die Luftaustrittsöffnungen und den ersten Abschnitt 21 jeder Luftaustrittsöffnung 20 herzustellen. Hiernach wird jede Bohrung in der oberen Deckplatte mittels eines Senkers bis zu einer definierten Tiefe angesenkt, um hierdurch den jeweils zweiten Abschnitt 22 zu jeder Luftaustrittsöffnung 20 herzustellen.

Die untere Deckplatte 40 wird im Bereich ihrer flächigen Ausnehmung 44 ausgefräst, wobei der Rand 49 allseits stehen bleibt. Die Durchgangsbohrung 32 wird in die untere Deckplatte 10 eingebracht.

Die Luftverteilungsschicht 30 wird aus einem Kunststoff in einem Formgebungswerkzeug geschäumt und härtet darin aus. Sie wird gegebenenfalls noch zugeschnitten. Hiernach werden durch spanende Bearbeitung die Luftführungskanäle 34-36 in die Oberseite der Luftverteilungsschicht bis zu einer definierten Tiefe eingebracht und die Bohrung 31 gebohrt.

Hierauf folgend wird die Luftverteilungsschicht unterseitig mit Klebstoff beschichtet und auf die untere Deckplatte im Bereich der flächigen Ausnehmung 44 aufgeklebt.

Hierauf folgend wird die Luftverteilungsschicht in dem Bereich ihrer oberen Flächenanteile ebenfalls mit Klebstoff beschichtet und die obere Deckplatte auf die Luftverteilungsschicht aufgeklebt. Dabei schließt die untere Fläche der oberen Deckplatte 10 dichtend mit dem umlaufenden Rand 49 der unteren Deckplatte 40 ab.

Mittels von unten durch entlang des Randes 49 verteilter Durchgangsbohrungen 49a in der unteren Deckplatte 40 wird die untere Deckplatte zusätzlich mittels Schrauben, welche in entsprechende Sacklochgewindebohrungen in der oberen Deckplatte eingebracht werden, verschraubt.

Hierauf folgend wird an der Unterseite der unteren Deckplatte 40 die Luftpumpe 50 befestigt und mit der Lufteintrittsöffnung 33 verbunden.

Die Figuren 5 und 6 zeigen eine Luftdruckquelle für den erfindungsgemäßen Luftkissentisch in einer ersten Stellung für eine Druckluftbereitstellung und einer zweiten Stellung für eine Saugluftbereitstellung. Die Luftdruckquelle wird durch ein Axial-Radial Gebläse 150 bereit gestellt, welches Luft über eine axiale Zufuhr 151 ansaugt und über eine radiale Abführöffnung 152 abgibt. An der axialen Ansaugöffnung 151 liegt folglich Saugluft bzw. ein Unterdruck, an der radialen Abführöffnung 152 Druckluft bzw. ein Überdruck an

Die Ansaugöffnung ist über einen unterdruckgeeigneten Schlauch 153 mit einem unten liegenden Anschluss eines Schieberventils 160 verbunden. Die Abführöffnung 152 ist mit dem oberen Anschluss des Schieberventils 160 verbunden.

Das Schieberventil 160 umfasst einen ortsfest an dem axial-radial Gebläse 150 befestigten Rahmen 161. In dem Rahmen 161 sind eine obere Öffnung 162 und eine untere Öffnung 163 ausgebildet, welche in Verbindung mit der Abführöffnung einerseits und der Ansaugöffnung andererseits des Axial-Radial Gebläses stehen.

Weiterhin ist an dem Rahmen 161 eine Ventilplatte 164 vertikal verschieblich gelagert. An der Ventilplatte 164 ist ein Schlauch 165 befestigt, der mit einer oberen Öffnung der Ventilplatte in Verbindung steht. Der Schlauch 165 dient dazu, dass Schieberventil 160 mit dem Luftkissentisch und den dort angeordneten Luftaustrittsöffnungen zu verbinden.

Die Ventilplatte 164 kann mittels eines Linearaktuators 166, der zwischen Rahmen 161 und Ventilplatte 164 gekoppelt ist, in vertikaler Richtung zwischen einer ersten und einer zweiten Stellung verschoben werden. In der ersten, in Figur 5 gezeigten Stellung kommuniziert die obere Öffnung der Ventilplatte mit der oberen Öffnung 162 des Rahmens und führt so der Verbindungsleitung 165 Druckluft zu, während die untere Öffnung 163 der Rahmenplatte mit der unteren Öffnung 163 der Ventilplatte kommuniziert und ein Ansaugen von Luft aus der unmittelbaren Umgebung der Luftdruckquelle ermöglicht. In der zweiten Stellung ist die Ventilplatte gegenüber der ersten Stellung abgesenkt, so dass die Verbindungsleitung 165 mit der unteren Öffnung 163 des Ventilrahmens kommuniziert und hierdurch wird ein Saugdruck in der Verbindungsleitung 165 erzeugt und folglich die Fixierfunktion des Luftkissentischs eingeschaltet. Die obere Öffnung 162 des Ventilrahmens kann hierbei die angesaugte Luft frei in die Umgebung der Luftdruckquelle abgeben.

## Patentansprüche

1. Holzbearbeitungsmaschine, insbesondere Plattensäge, mit einem Luftkissentisch zur verschieblichen Lagerung flächiger Werkstücke, der Luftkissentisch umfassend:
- zumindest eine Luftzuführungsöffnung,
- eine obere Auflagefläche (11) mit einer Vielzahl von Luftaustrittsöffnungen (20),
- einen Luftverteiler zur Verbindung der zumindest einen Luftzuführungsöffnung mit der Vielzahl von Luftaustrittsöffnungen (20),
**dadurch gekennzeichnet, dass** der Luftverteiler mit zumindest einer, vorzugsweise jeder Luftaustrittsöffnung (20) über einen Luftaustrittskanal verbunden ist, der sich vom Luftverteiler bis zu der Luftaustrittsöffnung (20) erstreckt und der einen unterhalb der oberen Auflagefläche (11) liegenden ersten Abschnitt (21) aufweist, dessen Querschnitts in Erstreckungsrichtung des Luftaustrittskanals konstant ist und der zwischen dem ersten Abschnitt (21) und der oberen Auflagefläche (11) einen zweiten Abschnitt (22) aufweist, dessen Querschnitt ausgehend von diesem ersten Abschnitt (21) in Richtung auf die obere Auflagefläche (11) erweitert ist.

2. Holzbearbeitungsmaschine nach Anspruch 1,
**dadurch gekennzeichnet, dass** sich der zweite Abschnitt (22) von dem ersten Abschnitt (21) bis zur oberen Auflagefläche(11) erstreckt.

3. Holzbearbeitungsmaschine nach Anspruch 1 oder 2,
**dadurch gekennzeichnet, dass** sich der Querschnitt des zweiten Abschnitts (22) stetig erweitert und der Querschnitt des ersten und/oder des zweiten Abschnitt (21) bzw. (22) vorzugsweise rotationssymmetrisch ist.

4. Holzbearbeitungsmaschine nach einem der vorhergehenden Ansprüche,
**dadurch gekennzeichnet, dass** zwischen dem Luftverteiler und der Vielzahl von Luftaustrittsöffnungen (20), vorzugsweise zwischen der zumindest einen Luftzuführungsöffnung und der Vielzahl von Luftaustrittsöffnungen (20) kein Ventil im Strömungsweg angeordnet ist.

5. Holzbearbeitungsmaschine nach einem der vorhergehenden Ansprüche oder dem Oberbegriff von Anspruch 1,
**dadurch gekennzeichnet, dass** die Luftaustrittsöffnungen (20) in einer oberen Deckplatte (10) angeordnet sind und sich zumindest ein Teil jedes Luftaustrittskanals, vorzugsweise der erste und zweite Abschnitt (21) bzw. (22) des Luftaustrittskanals, in der Deckplatte (10) ausgebildet ist und sich von der Oberseite zu der Unterseite der Deckplatte (10) erstreckt und die Unterseite der Deckplatte (10) mit einer Luftverteilungsschicht (30) verbunden ist, welche als Luftverteiler ausgebildet ist.

6. Holzbearbeitungsmaschine nach dem vorhergehenden Anspruch,
**dadurch gekennzeichnet, dass** die Luftverteilungsschicht (30) zwischen der oberen Deckplatte (10) und einer unteren Deckplatte (40), welche den Austritt von Luft nach unten verhindert, angeordnet ist. und dass die Luftverteilungsschicht (30) und/oder die obere Deckplatte (10) eine Vielzahl von Luftführungskanälen (34, 35, 36) aufweist, welche die zumindest eine Lufteintrittsöffnung (33) mit der Vielzahl von Luftaustrittsöffnungen (20) verbinden.

7. Holzbearbeitungsmaschine nach einem der vorhergehenden Ansprüche 5 oder 6,
**dadurch gekennzeichnet, dass** die Luftverteilungsschicht (30) in mehrere strömungstechnisch voneinander getrennte Bereiche unterteilt ist, welche mit jeweils zumindest einer Lufteintrittsöffnung (33) verbunden sind und jeweils die zumindest eine Lufteintrittsöffnung (33) mit einer von entsprechend mehreren Gruppen von Austrittsöffnungen strömungstechnisch verbinden und dass vorzugsweise jeder Bereich der Luftverteilungsschicht (30) mit einer separat ansteuerbaren Luftdruckquelle (50) verbunden ist oder mitttels eines separat ansteuerbaren Durchflussventils mit einer Luftdruckquelle (50) verbunden ist, die mehrere Bereiche mit Luftdruck beaufschlagt.

8. Holzbearbeitungsmaschine nach einem der vorhergehenden Ansprüche,
**dadurch gekennzeichnet, dass** die obere Deckplatte (10) und gegebenenfalls die untere Deckplatte (40) aus einem ersten Material, vorzugsweise einem metallischen Werkstoff wie Aluminium oder nichtrostender Stahl bestehen und die Luftverteilungsschicht (30) aus einem zweiten Material, vorzugsweise einem Kunststoff, besteht und die obere bzw. untere Deckplatte (10) bzw. (40) mit der Luftverteilungsschicht (30) verklebt ist.

9. Holzbearbeitungsmaschine nach einem der vorhergehenden Ansprüche,
**dadurch gekennzeichnet, dass** die zumindest eine Lufteintrittsöffnung (33) solcherart mit einer umschaltbaren Luftpumpe verbunden ist, dass die Luftpumpe in einer ersten Betriebsschaltung Druckluft zu der zumindest einen Lufteintrittsöffnung (33) versorgt und in einer zweiten Betriebsschaltung einen Unterdruck an die zumindest eine Lufteintrittsöffnung (33) anlegt.

10. Holzbearbeitungsmaschine nach einem der vorhergehenden Ansprüche,
**gekennzeichnet durch** eine Erfassungsvorrichtung zum Erfassen der Anzahl von Werkstücken auf dem Luftkissentisch und/oder der Auflagefläche, welche **durch** ein oder mehrere Werkstücke auf dem Luftkissentisch eingenommen wird und/oder der Gewichtskraft, welche die Werkstücke auf der Auflagefläche des Luftkissentischs aufbringen, und weiter **gekennzeichnet durch** eine Steuerungsvorrichtung, welche signaltechnisch mit der Erfassungsvorrichtung verbunden und ausgebildet ist, um eine Luftdruckquelle (50) oder ein Durchflussventil, welche den Luftvolumenstrom **durch** und/oder den Luftdruck an den Luftaustrittsöffnungen (20) zu steuern, in Abhängigkeit der Werkstückanzahl, der Auflagefläche und/oder der Gewichtskraft anzusteuern.

11. Holzbearbeitungsmaschine nach dem vorhergehenden Anspruch,
**dadurch gekennzeichnet, dass** die Erfassungsvorrichtung in einer in einen Steuerungsrechner der Holzbearbeitungsmaschine eingespeicherten Planungssoftware integriert ist, weiche die Werkstückbearbeitung plant und dem Benutzer angibt, welche Werkstücke er auf die Auflagefläche aufzulegen hat und welche daraus abgeleitet zu jedem bearbeitungszeitpunkt abgespeichert hat, welche Werkstücke auf der Auflagefläche gelagert sein müssten.

12. Holzbearbeitungsmaschine nach einem der beiden vorhergehenden Ansprüche,
**dadurch gekennzeichnet dass** die Erfassungsvorrichtung eine optische Erfassungseinheit umfasst, welche angeordnet und ausgerichtet ist, um die Auflagefläche zu graphisch erfassen, und eine mit der optischen Erfassungseinheit signaltechnisch verbundene Bildauswertungseinheit, welche ausgebildet ist, um anhand den von der optischen Erfassungseinheit bereitgestellten Daten die Abmessungen der auf der Auflagefläche liegenden Werkstücke zu ermitteln.

13. Luftkissentisch für eine Holzbearbeitungsmaschine, insbesondere Plattensäge nach einem der vorhergehenden Ansprüche, umfassend:
- zumindest eine Luftzuführungsöffnung,
- eine obere Auflagefläche (11) mit einer Vielzahl von Luftaustrittsöffnungen (20),
- einen Luftverteiler zur Verbindung der zumindest einen Luftzuführungsöffnung mit der Vielzahl von Luftaustrittsöffnungen (20),
**dadurch gekennzeichnet, dass** der Luftverteiler mit zumindest einer, vorzugsweise jeder Luftaustrittsöffnung (20) über einen Luftaustrittskanal verbunden ist, der sich vom Luftverteiler bis zu der Luftaustrittsöffnung (20) erstreckt und der einen unterhalb der oberen Auflagefläche (11) liegenden ersten Abschnitt (21) aufweist, dessen Querschnitt in Erstreckungsrichtung des Luftaustrittskanals konstant ist und der zwischen dem ersten Abschnitt (21) und der oberen Auflagefläche (11) einen zweiten Abschnitt (22) aufweist, dessen Querschnitt ausgehend von diesem ersten Abschnitt (21) in Richtung auf die obere Auflagefläche (11) erweitert ist und weiterhin **gekennzeichnet durch** eine Erfassungsvorrichtung zum Erfassen der Anzahl von Werkstücken auf dem Luftkissentisch und/oder der Auflagefläche, welche durch ein oder mehrere Werkstücke auf dem Luftkissentisch eingenommen wird und/oder der Gewichtskraft, welche die Werkstücke auf der Auflagefläche des Luftkissentischs aufbringen, und weiter **gekennzeichnet durch** eine Steuerungsvorrichtung, welche signaltechnisch mit der Erfassungsvorrichtung verbunden und ausgebildet ist, um eine Luftdruckquelle (50) oder ein Durchflussventil, welche den Luftvolumenstrom **durch** und/oder den Luftdruck an den Luftaustrittsöffnungen (20) zu steuern, in Abhängigkeit der Werkstückanzahl, der Auflagefläche und/oder der Gewichtskraft anzusteuern.

14. Verfahren zum Herstellen eines Luftkissentischs für eine Holzbearbeitungsmaschine, insbesondere Plattensäge, mit den Schritten:
- Bereitstellen einer Luftverteilungsschicht (30),
- Einbringen zumindest einer Lufteintrittsöffnung (33) und mehrerer mit der zumindest einen Lufteintrittsöffnung in Verbindung stehenden Kanälen in die Luftverteilungsschicht (30),
- Bereitstellen einer oberen Deckplatte (10),
- Einbringen mehrere Luftaustrittsöffnungen (20) in die Deckplatte (10),
- Einbringen mehrerer Luftführungskanäle (34, 35, 36) in die Luftverteilungsschicht (30) und/oder die obere Deckplatte (10),
- Aufkleben der oberen Deckplatte (10) auf die Luftverteilungsschicht (30) so dass die mehreren Luftaustrittsöffnungen (20) über die Luftführungskanäle (34, 35, 36) mit der Lufteintrittsöffnung (33) verbunden werden.

15. Verfahren nach dem vorhergehenden Anspruch,
**dadurch gekennzeichnet, dass** gegenüberliegend zur oberen Deckplatte (10) eine untere Deckplatte (40) mit der Luftverteilungsschicht (30) verklebt wird, welche die Kanäle gegen die Umgebung abdichtet und /oder dass an der Luftverteilungschicht oder der unteren Deckplatte (40) eine Druckluftquelle im Bereich der Lufteintrittsöffnung (33) befestigt wird, welche Druckluft in die Lufteintrittsöffnung versorgt.

## Claims

1. Wood processing machine, in particular panel saw, with an air cushion table for the movable mounting of flat workpieces, the air cushion table comprising:
- at least one air feed opening,
- an upper support surface (11) with a multiplicity of air outflow openings (20),
- an air distributor to connect the at least one air feed opening to the multiplicity of air outflow openings (20),
**characterised in that** the air distributor is connected to at least one, preferably each, air outflow opening (20) via an air outflow channel which extends from the air distributor to the air outflow opening (20) and which has a first section (21) lying below the upper support surface (11), the cross-section of which section is constant in the direction of extension of the air outflow channel and which has, between the first section (21) and the upper support surface (11), a second section (22), the cross-section of which is extended starting from this first section (21) in the direction of the upper support surface (11).

2. Wood processing machine according to claim 1, **characterised in that** the second section (22) extends from the first section (21) to the upper support surface (11).

3. Wood processing machine according to claim 1 or 2, **characterised in that** the cross-section of the second section (22) steadily extends and the cross-section of the first and/or second section (21) or (22) is preferably rotationally symmetrical.

4. Wood processing machine according to one of the preceding claims,
**characterised in that** no valve is arranged in the flow path between the air distributor and the multiplicity of air outflow openings (20), preferably between the at least one air feed opening and the multiplicity of air outflow openings (20).

5. Wood processing machine according to one of the preceding claims or the preamble of claim 1,
**characterised in that** the air outflow openings (20) are arranged in an upper cover panel (10) and at least one part of each air outflow channel, preferably the first and second section (21) or (22) of the air outflow channel, is developed in the cover panel (10) and extends from the top to the bottom of the cover panel (10) and the bottom of the cover panel (10) is connected to an air distribution layer (30) which is developed as an air distributor.

6. Wood processing machine according to one of the preceding claims,
**characterised in that** the air distribution layer (30) is arranged between the upper cover panel (10) and a lower cover panel (40) which prevents the outflow of air downwards, and that the air distribution layer (30) and/or the upper cover panel (10) has a multiplicity of air guide channels (34, 35, 36) which connect the at least one air inflow opening (33) to the multiplicity of air outflow openings (20).

7. Wood processing machine according to one of the preceding claims 5 or 6,
**characterised in that** the air distribution layer (30) is sub-divided into a plurality of areas, separated from one another by flow, which are connected to in each case at least one air inflow opening (33) and in each case the at least one air inflow opening (33) is connected by flow to one of a corresponding plurality of groups of air outflow openings, and that preferably each area of the air distribution layer (30) is connected to a separately controllable air pressure source (50) or is connected by means of a separately controllable flow valve to an air pressure source (50) which applies air pressure to a plurality of areas.

8. Wood processing machine according to one of the preceding claims,
**characterised in that** the upper cover panel (10) and optionally the lower cover panel (40) consist of a first material, preferably a metal material such as aluminium or stainless steel and the air distribution layer (30) consists of a second material, preferably a plastic, and the upper or lower cover panel (10) or (40) is bonded to the air distribution layer (30).

9. Wood processing machine according to one of the preceding claims,
**characterised in that** the at least one air inflow opening (33) is connected to a reversible air pump in such a way that the air pump supplies compressed air in a first operating circuit to the at least one air inflow opening (33) and in a second operating circuit applies a negative pressure to the at least one air inflow opening (33).

10. Wood processing machine according to one of the preceding claims,
**characterised by** a recording device for recording the number of workpieces on the air cushion table and/or support surface which is occupied by one or more workpieces on the air cushion table and/or the weight force that the workpieces apply to the support surface of the air cushion table, and further **characterised by** a control device which is connected by signals to the recording device and developed to control an air pressure source (50) or a flow valve which controls the air volumetric flow rate and/or the air pressure on the air outflow openings (20) as a function of the number of workpieces, the support surface and/or the weight force.

11. Wood processing machine according to one of the preceding claims,
**characterised in that** the recording device is integrated in planning software stored in a control computer of the wood processing machine, which software plans the workpiece processing and informs the user which workpieces he has to place on the support surface and which deduces, at each processing time *[it has stored],* which workpieces must be placed on the support surface.

12. Wood processing machine according to one of the two preceding claims,
**characterised in that** the recording device comprises an optical recording device which is arranged and oriented to record the support surface in the form of graphs and an image evaluation unit connected by signals to the optical recording device, which unit is developed to determine, by means of the data provided by the optical recording unit, the dimensions of the workpieces lying on the support surface.

13. Air cushion table for a wood processing machine, in particular panel saw, according to one of the preceding claims, comprising:
- at least one air feed opening,
- an upper support surface (11) with a multiplicity of air outflow openings (20),
- an air distributor to connect the at least one air feed opening to the multiplicity of air outflow openings (20),
**characterised in that** the air distributor is connected to at least one, preferably each, air outflow opening (20) via an air outflow channel which extends from the air distributor to the air outflow opening (20) and which has a first section (21) lying below the upper support surface (11), the cross-section of which section is constant in the direction of extension of the air outflow channel and which has, between the first section (21) and the upper support surface (11), a second section (22), the cross-section of which is extended starting from this first section (21) in the direction of the upper support surface (11) and furthermore **characterised by** a recording device for recording the number of workpieces on the air cushion table and/or support surface which is occupied by one or more workpieces on the air cushion table and/or the weight force that the workpieces apply to the support surface of the air cushion table, and further **characterised by** a control device which is connected by signals to the recording device and developed to control an air pressure source (50) or a flow valve which controls the air volumetric flow rate and/or the air pressure on the air outflow openings (20) as function of the number of workpieces, the support surface and/or the weight force.

14. Method of producing an air cushion table for a wood processing machine, in particular panel saw, with the steps:
- provision of an air distribution layer (30),
- introduction of at least one air inflow opening (33) and a plurality of channels connected to at least one air inflow opening into the air distribution layer (30),
- provision of an upper cover panel (10),
- introduction of a plurality of air outflow openings (20) into the cover panel (10),
- introduction of a plurality of air guide channels (34, 35, 36) into the air distribution layer (30) and/or the upper cover panel (10),
- bonding of the upper cover panel (10) to the air distribution layer (30) so that the plurality of air outflow openings (20) are connected to the air inflow opening (33) via the air guide channels (34, 35, 36).

15. Method according to the preceding claim,
**characterised in that** opposite the upper cover panel (10) a lower cover panel (40) is bonded to the air distribution layer (30) which seals the channels against the surrounding environment and/or that a compressed air source is attached to the air distribution layer or lower cover panel (40) in the area around the air inflow opening (33) which feeds compressed air into the air inflow opening.

## Revendications

1. Machine de traitement du bois, en particulier scie à panneaux, avec une table à coussin d'air pour le l'acceuil mobile de pièces à usiner plates, la table à coussin d'air comprenant :
- au moins une ouverture d'amenée d'air,
- une surface d'appui supérieure (11) avec une pluralité d'ouvertures de sortie d'air (20),
- un diffuseur d'air pour la liaison de l'au moins une ouverture d'amenée d'air avec la pluralité d'ouvertures de sortie d'air (20),
**caractérisée en ce que** le diffuseur d'air est relié à au moins une, de préférence chaque ouverture de sortie d'air (20) par un canal de sortie d'air qui s'étend du diffuseur d'air à l'ouverture de sortie d'air (20) et qui présente une première section (21) se trouvant sous la surface d'appui supérieure (11), dont la section transversale est constante dans le sens d'étendue du canal de sortie d'air et qui présente entre la première section (21) et la surface d'appui supérieure (11) une seconde section (22), dont la section transversale va en s'élargissant à partir de cette première section (21) en direction de la surface d'appui supérieure (11).

2. Machine de traitement du bois selon la revendication 1,
**caractérisée en ce que** la seconde section (22) s'étend de la première section (21) à la surface d'appui supérieure (1).

3. Machine de traitement du bois selon la revendication 1 ou 2,
**caractérisée en ce que** la section transversale de la seconde section (22) s'élargit en continu et la section transversale de la première et/ou de la seconde section (21) ou (22) présente de préférence une symétrie de révolution.

4. Machine de traitement du bois selon l'une quelconque des revendications précédentes,
**caractérisée en ce qu'**aucune soupape n'est agencée dans la voie d'écoulement entre le diffuseur d'air et la pluralité d'ouvertures de sortie d'air (20), de préférence entre l'au moins une ouverture d'amenée d'air et la pluralité d'ouvertures de sortie d'air (20).

5. Machine de traitement du bois selon l'une quelconque des revendications précédentes ou le préambule selon la revendication 1,
**caractérisée en ce que** les ouvertures de sortie d'air (20) sont agencées dans une plaque de recouvrement supérieure (10) et au moins une partie de chaque canal de sortie d'air, de préférence la première et seconde section (21) ou (22) du canal de sortie d'air, est réalisée dans la plaque de recouvrement (10) et s'étend depuis le côté supérieur jusqu'au côté inférieur de la plaque de recouvrement (10) et le côté inférieur de la plaque de recouvrement (10) est relié à une couche de diffusion d'air (30) qui est réalisée comme un diffuseur d'air.

6. Machine de traitement du bois selon la revendication précédente,
**caractérisée en ce que** la couche de diffusion d'air (30) est agencée entre la plaque de recouvrement supérieure (10) et une plaque de recouvrement inférieure (40) qui empêche la sortie d'air vers le bas et **en ce que** la couche de diffusion d'air (30) et/ou la plaque de recouvrement supérieure (10) présente une pluralité de canaux de guidage d'air (34, 35, 36) qui relient l'au moins une ouverture d'entrée d'air (33) à la pluralité d'ouvertures de sortie d'air (20).

7. Machine de traitement du bois selon l'une quelconque des revendications précédentes 5 ou 6,
**caractérisée en ce que** la couche de diffusion d'air (30) est divisée en plusieurs zones séparées les unes des autres en ce qui concerne l'écoulement qui sont reliées à respectivement au moins une ouverture d'entrée d'air (33) et relient en ce qui concerne l'écoulement respectivement l'au moins une ouverture d'entrée d'air (33) à un des plusieurs groupes d'ouvertures de sortie correspondants et **en ce que** de préférence chaque zone de la couche de diffusion d'air (30) est reliée à une source de pression d'air (50) pouvant être commandée séparément ou est reliée l'aide d'une soupape de débit pouvant être commandée séparément à une source de pression d'air (50) qui alimente plusieurs zones en pression d'air.

8. Machine de traitement du bois selon l'une quelconque des revendications précédentes,
**caractérisée en ce que** la plaque de recouvrement supérieure (10) et éventuellement la plaque de recouvrement inférieure (40) se composent d'un premier matériau, de préférence d'un matériau métallique tel que l'aluminium ou l'acier inoxydable, et la couche de diffusion d'air (30) se compose d'un second matériau, de préférence d'un matériau plastique, et la couche de recouvrement supérieure ou inférieure (10) ou (40) est collée la couche de diffusion d'air (30).

9. Machine de traitement du bois selon l'une quelconque des revendications précédentes,
**caractérisée en ce que** l'au moins une ouverture d'entrée d'air (33) est reliée à une pompe à air commutable de telle sorte que la pompe à air alimente dans un premier circuit de fonctionnement en air sous pression l'au moins une ouverture d'entrée d'air (33) et crée dans un second circuit de fonctionnement une dépression sur l'au moins une ouverture d'entrée d'air (33).

10. Machine de traitement du bois selon l'une quelconque des revendications précédentes,
**caractérisée par** un dispositif de détection pour la détection du nombre de pièces à usiner sur la table à coussin d'air et/ou la surface d'appui qui est occupée par une ou plusieurs pièces à usiner sur la table à coussin d'air et/ou la force de poids qu'appliquent les pièces à usiner sur la surface d'appui de la table à coussin d'air, et **caractérisée en outre par** un dispositif de commande qui est relié en ce qui concerne le signal au dispositif de détection et est réalisé afin de commander une source de pression d'air (50) ou une soupape de débit, qui commande le débit d'air passant par et/ou la pression d'air sur les ouvertures de sortie d'air (20), en fonction du nombre de pièce à usiner de la surface d'appui et/ou de la force de poids.

11. Machine de traitement du bois selon la revendication précédente,
**caractérisée en ce que** le dispositif de détection est intégré dans un logiciel de planification enregistré dans un ordinateur de commande de la machine de traitement du bois qui planifie le traitement de pièces à usiner et indique à l'utilisateur quelles pièces à usiner il doit poser sur la surface d'appui et par déduction lesquelles il a enregistré à chaque moment de traitement, quelles pièces doivent être logées sur la surface d'appui.

12. Machine de traitement du bois selon l'une quelconque des deux revendications précédentes,
**caractérisée en ce que** le dispositif de détection comporte une unité de détection optique qui est agencée et orientée afin de détecter graphiquement la surface d'appui et une unité d'évaluation d'image reliée en ce qui concerne le signal à l'unité de détection optique qui est réalisée afin de déterminer à l'aide des données mises à disposition par l'unité de détection optique les dimensions des pièces à usiner se trouvant sur la surface d'appui.

13. Table à coussin d'air pour une machine de traitement du bois, en particulier une scie à panneaux selon l'une quelconque des revendications précédentes comprenant :
- au moins une ouverture d'amenée d'air,
- une surface d'appui supérieure (11) avec une pluralité d'ouvertures de sortie d'air (20),
- un diffuseur d'air pour la liaison de l'au moins une ouverture d'amenée d'air à la pluralité d'ouvertures de sortie d'air (20),
**caractérisée en ce que** le diffuseur d'air est relié à au moins une, de préférence chaque ouverture de sortie d'air (20) par un canal de sortie d'air qui s'étend du diffuseur d'air à l'ouverture de sortie d'air (20) et qui présente une première section (21) se trouvant sous la surface d'appui supérieure (11), dont la section transversale est constante dans le sens d'étendue du canal de sortie d'air et qui présente entre la première section (21) et la surface d'appui supérieure (11) une seconde section (22), dont la section transversale s'élargit à partir de cette première section (21) en direction de la surface d'appui supérieure (11) et **caractérisée en outre par** un dispositif de détection pour la détection du nombre de pièces à usiner sur la table à coussin d'air et/ou la surface d'appui qui est occupée par une ou plusieurs pièces à usiner sur la table à coussin d'air et/ou la force du poids qu'appliquent les pièces à usiner sur la surface d'appui de la table à coussin d'air, et **caractérisée en outre par** un dispositif de commande qui est relié en ce qui concerne le signal au dispositif de détection et est réalisé afin de commander une source de pression d'air (50) ou une soupape de débit qui commande le débit d'air passant par et/ou la pression d'air sur les ouvertures de sortie d'air (20), en fonction du nombre de pièce à usiner, de la surface d'appui et/ou de la force de poids.

14. Procédé de fabrication d'une table à coussin d'air pour une machine de traitement du bois, en particulier scie à panneaux avec les étapes suivantes :
- la mise à disposition d'une couche de diffusion d'air (30),
- l'introduction d'au moins une ouverture d'entrée d'air (33) et de plusieurs canaux se trouvant en liaison avec l'au moins une ouverture d'entrée d'air dans la couche de diffusion d'air (30),
- la mise à disposition d'une plaque de recouvrement supérieure (10),
- l'introduction de plusieurs ouvertures de sortie d'air (20) dans la plaque de recouvrement (10),
- l'introduction de plusieurs canaux de guidage d'air (34, 35, 36) dans la couche de diffusion d'air (30) et/ou la couche de recouvrement supérieure (10),
- le collage de la plaque de recouvrement supérieure (10) sur la couche de diffusion d'air (30) de sorte que les plusieurs ouvertures de sortie d'air (20) soient reliées par les canaux de guidage d'air (34, 35, 36) à l'ouverture d'entrée d'air (33).

15. Procédé selon la revendication précédente,
**caractérisé en ce qu'**en regard de la plaque de recouvrement supérieure (10), une plaque de recouvrement inférieure (40) est collée à la couche de diffusion d'air (30) qui rend étanche les canaux par rapport à l'environnement et/ou **en ce qu'**une source de pression d'air est fixée sur la couche de diffusion d'air ou la plaque de recouvrement inférieure (40) dans la zone de l'ouverture d'entrée d'air (33), laquelle alimente l'ouverture d'entrée d'air en air sous pression.
